# EUROPEAN PATENT APPLICATION

(11) **EP 2 076 088 A1**
(43) Date of publication of application: **01.07.2009**
(21) Application number: 08165939.3
(22) Date of filing: 06.10.2008
(51) Int. Cl.: H04W 72/12

(54) **Communication device, programm, and method**

(30) Priority: 28.12.2007 JP 2007339265
(71) Applicant: Fujitsu Limited, Kawasaki-shi, Kanagawa 211-8588 (JP)
(72) Inventor: Soejima, Yoshinori c/o Fujitsu Kyushu Network Technologies Limited, Fukuoka-shi, Fukuoka 814-8588 (JP); Obuchi, Kazuhisa c/o FUJITSU LIMITED, Kawasaki-shi, Kanagawa 211-8588 (JP); Suzuki, Masaaki c/o FUJITSU LIMITED, Kawasaki-shi, Kanagawa 211-8588 (JP); Otonari, Akihide c/o Fujitsu Kyushu Network Technologies Limited, Fukuoka-shi, Fukuoka 814-8588 (JP); Okamoto, Shinya c/o Fujitsu Kyushu Network Technologies Limited, Fukuoka-shi, Fukuoka 814-8588 (JP); Yamasaki, Miki c/o Fujitsu Kyushu Network Technologies Limited, Fukuoka-shi, Fukuoka 814-8588 (JP); Shinohara, Chiaki c/o Fujitsu Kyushu Network Technologies Limited, Fukuoka-shi, Fukuoka 814-8588 (JP)
(74) Representative: Stebbing, Timothy Charles

(57) **Abstract**

In a terminal of a LTE-based wireless communication system, the priority is set so that a control PDU is transmitted to a data controlling section (133) before a data PDU, and an LCH with higher priority is first transmitted among the control PDUs or among the data PDUs. In accordance with the priority, the data controlling section (133) instructs a control PDU transmission controlling section (123_1) and a data PDU transmission controlling section (123_2) of each LCH to transmit the control PDU and the data PDU to a transport block generating section (132) of a data multiplex section (13). The transport block generating section (132) multiplexes the header generated by a header generating section (131) and the control PDU and the data PDU transmitted from the control PDU transmission controlling section (123_1) and the data PDU transmission controlling section (123_2) of each LCH to generate a transport block.

## Description

This application is related to and claims priority of Japanese Patent Application No. 2007-339265 filed on December 28, 2007 in the Japan Patent Office.

The present invention relates to a communication device that transmits data, a communication method, and a program causing a computer to function as the communication device.

In recent years, a protocol of a wireless communication system called 3G (third generation) is widely employed.

Japanese Patent Application Publication No. 2005-341441 discusses a main queue of a MAC frame, multiple sub-queues used for retransmission control according to the priority of MAC frame, and a wireless communication device that extracts the MAC frame extracted from the main queue based on a destination and a priority identifier and that distributes the MAC frame to one of the sub-queues according to each priority.

The 3G has some developmental stages. In addition to a cellular phone employing the original 3G, a cellular phone employing 3.5G with a further higher communication speed or a protocol called HSDPA has entered the field. Furthermore, Super 3G or 3.9G, or a protocol called LTE (Long Term Evolution) is currently under review.

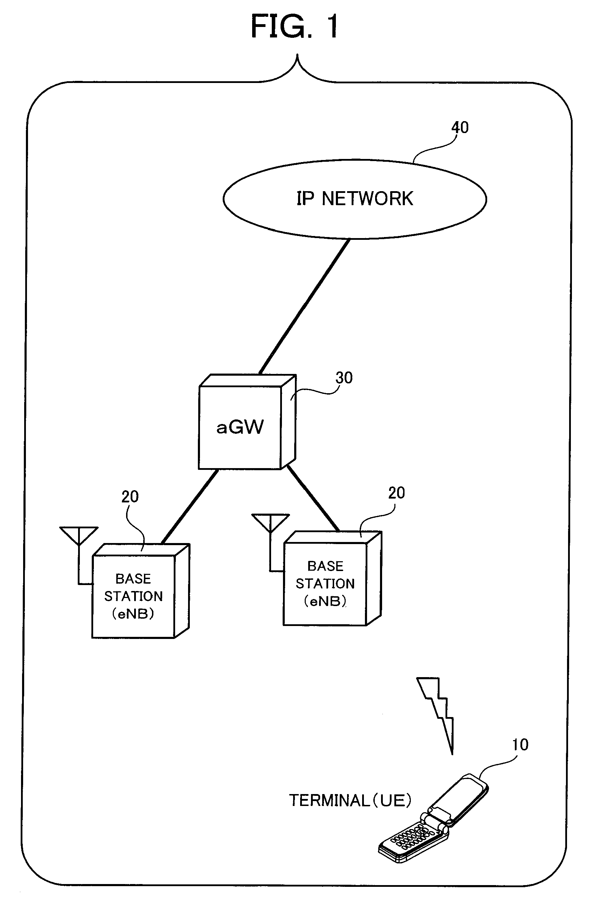

FIG. 1 is a schematic diagram of a wireless communication system employing the LTE protocol.

A terminal (UE; User Equipment) 10 wirelessly communicates with a base station (eNB; evolved Node B) 20 in accordance with the LTE protocol. The base stations (eNB) 20 are connected to an IP network 40 through an access gateway (aGW) 30 that intermediates a flow of data between the base stations (eNB) 20 and the IP network 40. Although only one aGW 30 is illustrated in FIG. 1, a large number of aGWs are connected to the IP network 40, and one or multiple eNBs exist under each aGW. Although only one UE 10 is illustrated in FIG. 1, a large number of UEs exist, and the UEs can intercommunicate through the eNB, the aGW, and the IP network 40.

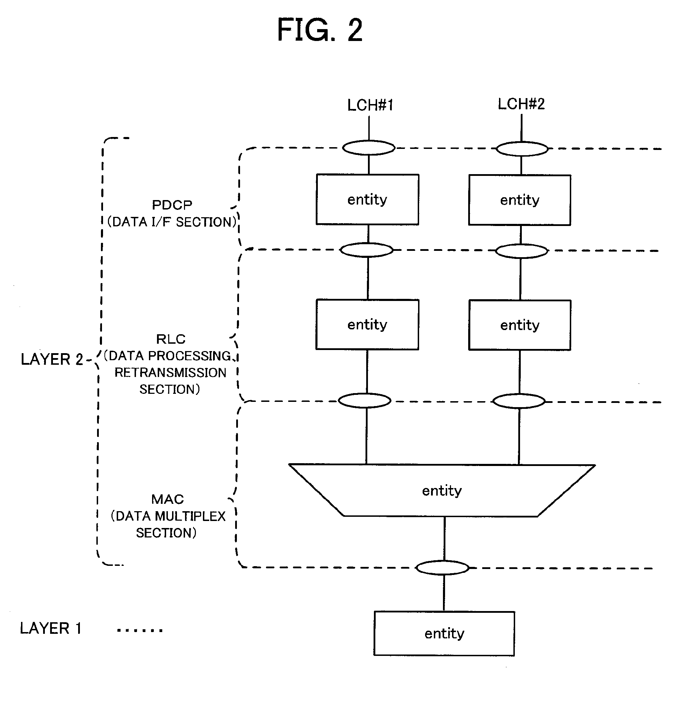

FIG. 2 illustrates a protocol configuration diagram of the LTE protocol.

The protocol in the wireless communication system of the 3G group is divided into multiple layers, and the same holds for the LTE protocol.

A layer 1 is a layer called a physical layer, and the layer 1 is a portion that performs the actual communication.

A layer 2 located on the upper side of the layer 1 is constituted by three sublayers including a MAC (Medium Access Control) sublayer, an RLC (Radio Link Control) sublayer, and a PDCP (Packet Data Convergence Protocol) sublayer.

A block of processing functions arranged in a layer or a sublayer is called an entity. The number of PDCP entities and RLC entities corresponds to the number of logical channels (LCH; Logical Channel) in use. The PDCP entities and RLC entities transmit and receive a PDU (Protocol Data Unit) for the respective logical channels. In case of the LTE protocol, a data encryption process and a data interface process with a further upper layer (not shown) are executed in a PDCP entity. A data conversion process and a retransmission process that requests a retransmission of insufficient data are executed in an RLC entity.

A MAC entity integrates the PDUs transmitted from the RLC entities into one PDU and forwards the PDU to the layer 1. In the receiver side, the MAC entity divides the PDU transmitted from the layer 1 into PDUs of respective logical channels and transmits the divided PDUs to the RLC entities of corresponding logical channels.

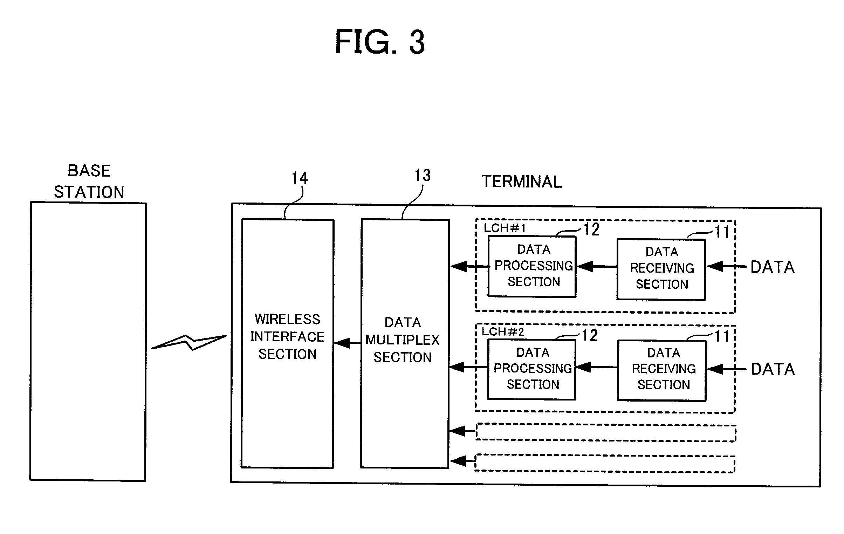

FIG. 3 illustrates a block diagram showing an example configuration of a terminal that wirelessly communicates with a base station. Transmitting data from the terminal to the base station will be described herein.

A configuration formed of a data receiving section 11 and a data processing section 12 is arranged in each of multiple logical channels LCH#1, LCH#2, .... A data multiplex section 13 that receives data from all multiple logical channels LCH#1, LCH#2, ... and a wireless interface section 14 that wirelessly communicates with the base station are illustrated.

The data receiving section 11 is equivalent to a PDCP entity in the case of the LTE protocol shown in FIG. 2 and is an element that receives data of the logical channels divided per service unit.

The data processing section 12 is equivalent to an RLC entity in the case of the LTE protocol shown in FIG. 2 and is an element that cuts out LCH data received in the data receiving section 11 into a transmittable size to generate the PDU.

The data multiplex section 13 is equivalent to a MAC entity in the case of the LTE protocol shown in FIG. 2 and is an element that multiplexes the PDUs forwarded from the logical channels into one PDU to create a transport block.

The wireless interface section 14 is equivalent to an entity arranged on the layer 1 in the case of the LTE protocol shown in FIG. 2 and is an element that wirelessly transmits the transport block generated by the data multiplex section 13 to the opposing base station.

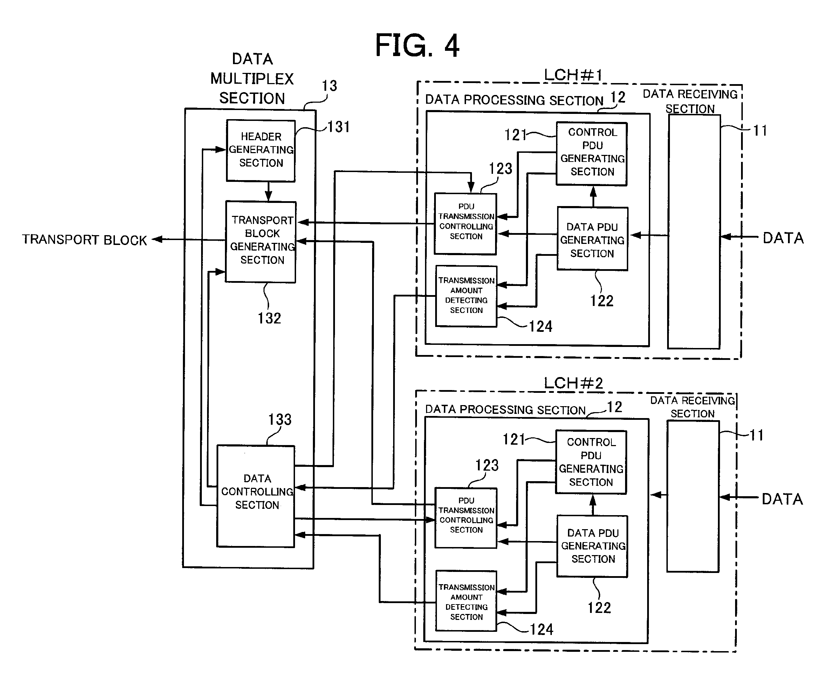

FIG. 4 illustrates a block diagram showing an example of a conventional configuration of a transmitter part of a terminal. To avoid the complication of illustration and description, it is assumed herein that only two logical channels (LCH#1 and LCH#2) exist.

A data PDU generating section 122 arranged on the data processing section 12 is an element that receives LCH user data received by the data receiving section 11 and that cuts out a necessary size of user data to generate a data PDU.

A control PDU generating section 121 is an element that transmits and receives control PDUs to and from a data processing section (not shown) of the opposing base station and that manages a PDU sequence number or transmission and receipt of data.

A transmission amount detecting section 124 detects the total amount of data of PDU generated by the data processing section 12, the total amount being the total of the data PDU generated by the data PDU generating section 122 and the control PDU generated by the control PDU generating section 121, and then informs the total amount to a data controlling section 133 of the data multiplex section 13.

A PDU transmission controlling section 123 receives the data PDU generated by the data PDU generating section 122 and the control PDU generated by the control PDU generating section 121 and transmits the PDUs to a transport block generating section 132 of the data multiplex section 13 based on an instruction of the data controlling section 133 of the data multiplex section 13.

The data controlling section 133 of the data multiplex section 13 allocates LCH data to the transport block to be transmitted to the base stations based on the transmittable amounts of data in the LCHs for the data amounts notified from the transmission amount detecting sections 124 of the data processing section 12 arranged on the LCHs, and then informs the transmission allocation amount to the PDU transmission controlling section 123 of the data processing section 12 of each LCH. The PDU transmission controlling section 123 of each LCH transmits the PDUs with amount of data equivalent to the transmission allocation amount allocated to the LCH of the transmission controlling section 123 to the transport block generating section 132 of the data multiplex section 13.

A header generating section 131 generates a header of the transport block generated in the transport block generating section 132 in accordance with the instruction of the data controlling section 133.

The transport block generating section 132 multiplexes the PDUs transmitted from the PDU generating section 123 of the LCHs and the header generated by the header generating section 131 to generate a transport block.

The transport block generated by the transport block generating section 132 is handed over from the data multiplex section 13 to the wireless interface section 14 shown in FIG. 3 and then wirelessly transmitted from the wireless interface section 14 to the base station.

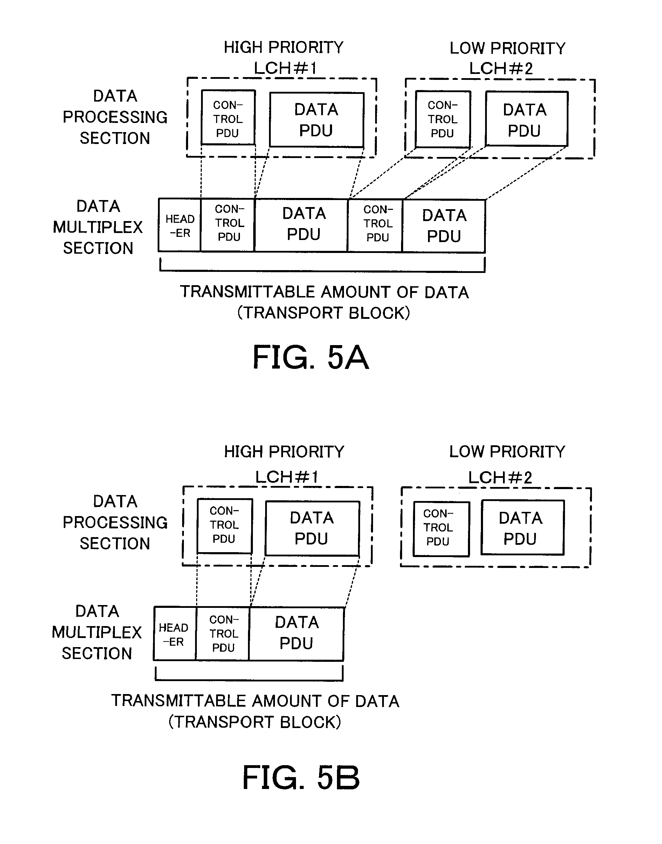

Figs. 5A and 5B are diagrams showing a conventional data poly-algorithm.

The transport block generating section 132 shown in FIG. 4 generates a transport block in accordance with the priority previously allocated to each of the logical channels. It is assumed herein that the priority of the LCH#1 is higher and the priority of the LCH#2 is lower.

As shown in FIG. 5A, when the total amount of data of the control PDU and the data PDU generated by all LCHs is smaller than the transmittable amount of data, the control PDU and the data PDU are multiplexed in a transport block, following the header, in order from an LCH with high priority to an LCH with low priority, and the transport block is generated.

Meanwhile, as shown in FIG. 5B, when the total amount of data of the control PDU and the data PDU generated in the LCHs is greater than the transmittable amount of data, the control PDU and the data PDU of the LCH#1 with high priority are preferentially multiplexed, and the PDU of the LCH#2 with low priority is left. Some delay based on the given priority in relation to the data PDU is unavoidable. However, a delay in the transmission of the control PDU may cause a significant problem, such as the transmitter and the receiver cannot synchronize.

The present invention has been made in view of the above circumstances and an embodiment thereof may provide a transmitting device capable of avoiding a transmission delay of important data.

A communication device of the present invention includes, in each of a plurality of channels:
each of a plurality of data processing sections that processes transmission data;
a data multiplex section that receives the transmission data from each of the plurality of data processing sections and generates a transport block formed of transmission data whose amount is transmittable in one transmission; and
a communication section that transmits the transport block in the form of data packet generated in the data multiplex section,
wherein each of the plurality of data processing sections further comprises a transmission amount detecting section that detects an amount of the transmission data and an amount of control data for controlling the transmission data for each type of the transmission data processed in the data processing section, and informs the detected amount of the transmission data and the detected amount of control data to the data multiplex section, and
the data multiplex section preferentially allocates the data sent from the plurality of data processing sections to the transport block based on the priority of the amount of the transmission data and the amount of control data of each type and the priority of each channel, which amounts are informed from the plurality of data processing sections.

In the transmitting device of the present invention, each data processing section informs the amount of data of each type to the data multiplex section, and the data multiplex section allocates data to the transport block based not only on the priority of the channels but also on the priority of the type of data. Therefore, providing a high priority to an important type of data avoids a transmission delay of important data.

Here, in the communication device according to present invention, it is preferable that each of the plurality of data processing sections further includes a user data generating section that generates user data, which is the transmission data, and a control data generating section that generates control data for controlling the user data,
the transmission amount detecting section informs the amount of the user data and the amount of the control data generated by the data processing section to the data multiplex section, and
the data multiplex section allocates the data sent from the plurality of data processing sections to the transport block so that the control data is transmitted prior to the user data.

Data that may cause serious consequences due to the transmission delay is concentrated in the control data. Therefore, prioritizing the control data over the user data enables to avoid the serious consequences due to the transmission delay.

It is also preferable, in the communication device according to present invention, that each of the plurality of data processing sections further includes a user data generating section that generates user data, which is the transmission data, and a control data generating section that generates control data for controlling the user data,
the transmission amount detecting section informs the amount of the control data for each type of control data generated by the data processing section and the amount of the user data generated by the data processing section to the data multiplex section, and
the data multiplex section allocates the data sent from the plurality of data processing sections to the transport block so that a specific type of control data among the control data is transmitted prior to the control data of a type other than the specific type and the user data.

Among the control data, although there are certain types of control data whose transmission delay is very likely to cause a serious consequence, there are other types of control data that may be transmitted a little later. Therefore, as described above, according to the additional feature of the present invention, the control data may be divided into types, the amount of data per type may be notified, and a higher priority may be given to the control data whose transmission delay should be avoided.

This additional feature makes it possible to avoid the transmission delay of important data while valuing (preserving) the priority of the channels.

Further, a program according to the present invention causes a computer to function as a communication device, the program including the steps causing the computer to execute in each of a plurality of channels of:
a plurality of data processing steps that process transmission data;
a data multiplex step that receives the transmission data from the plurality of data processing steps and generates a transport block formed of transmission data whose amount is transmittable in one transmission; and
a communication step that transmits the transport block in the form of data packet generated in the data multiplex step,
wherein each of the plurality of data processing steps further comprises a transmission amount detecting step that detects an amount of transmission data and an amount of control data for controlling the transmission data for each type of the transmission data processed in the data processing step, and informs the detected amount of transmission data and the detected amount of control data to the data multiplex step, and
the data multiplex step preferentially allocates the data sent from the plurality of data processing steps to the transport block based on the priority of the amount of transmission data and the amount of control data of each type and the priority of each channel, which amounts are informed from the plurality of data processing sections.

The above program may be stored on a computer-readable medium.

Furthermore, a communication method according to the present invention is a method that causes a computer to execute communication procedures, the communication method including in each of a plurality of channels:
a plurality of data processing procedures that process transmission data;
a data multiplex procedure that receives the transmission data from the plurality of data processing procedures and generates a transport block formed of transmission data whose amount is transmittable in one transmission; and
a communication procedure that transmits the transport block in the form of data packet generated by the data multiplex procedure,
wherein each of the plurality of data processing procedures further comprises a transmission amount detecting procedure that detects an amount of transmission data and an amount of control data for controlling the transmission data for each type of transmission data processed in the data processing procedure, and informs the detected amount of transmission data and the detected amount of control data to the data multiplex procedure, and
the data multiplex procedure preferentially allocates the data sent from the plurality of data processing procedures to the transport block based on the priority of the amount of transmission data and the amount of control data of each type and the priority of each channel, which amounts are informed from the plurality of data processing sections.

Reference is made, by way of example only, to the accompanying drawings in which:
FIG. 1 illustrates a schematic diagram of a wireless communication system when an LTE protocol is employed;
FIG. 2 illustrates a protocol configuration diagram of the LTE protocol;
FIG. 3 illustrates a block diagram showing a configuration of a terminal that wirelessly communicates with a base station;
FIG. 4 illustrates a block diagram showing a configuration of the transmitter of a conventional terminal;
FIGs. 5A and 5B illustrate diagrams showing a conventional data multiplex method;
FIG. 6 illustrates a block diagram showing an example of a configuration of a transmitting device as an embodiment of the present invention;
FIG. 7 illustrates an explanatory view of a data poly-algorithm of the embodiment shown in FIG. 6; and
FIGs. 8A and 8B illustrate diagrams showing the priority employed in a data controlling section.

Embodiments of the present invention will now be described.

FIGs. 1 to 3 and the descriptions with reference to FIGs. 1 to 3 can be employed as it is in the embodiments described below, and overlapping descriptions and drawings will be omitted.

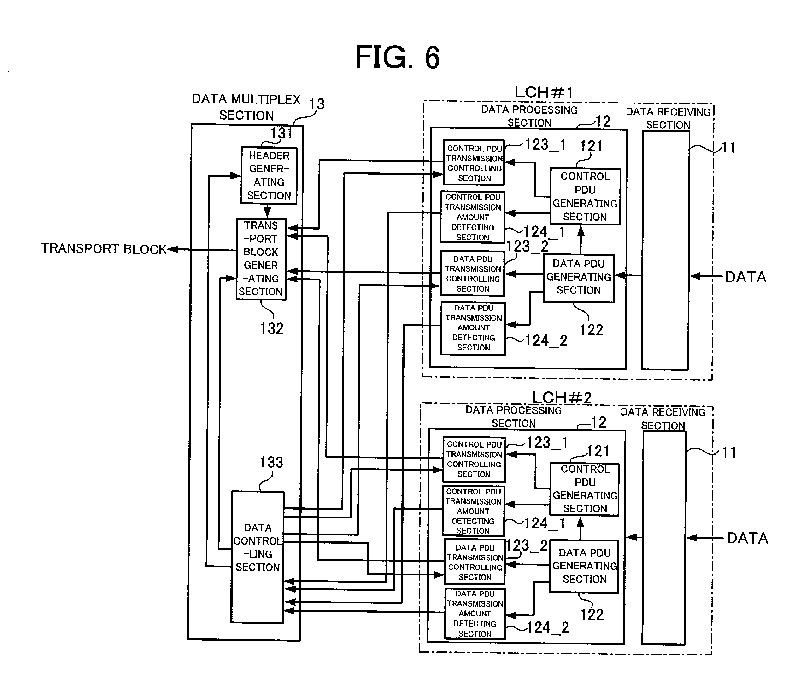

FIG. 6 illustrates a block diagram showing an example of a configuration of a transmitting device as an embodiment of the present invention. FIG. 6 illustrates a block diagram alternative to FIG. 4 in the conventional example. The constituent elements corresponding to the constituent elements shown in FIG. 4 are designated with the same reference numerals as the reference numerals designated in FIG. 4 even if there are differences in the operation, and only the differences will be described. FIG. 6 also illustrates only two channels of the LCH#1 and the LCH#2 provided as the logical channels, for the simplicity of the illustration and the description.

The data controlling section 12 shown in FIG. 6 includes a control PDU transmission controlling section 123_1 and a data PDU transmission controlling section 123_2 in place of the PDU transmission controlling section 123 shown in FIG. 4. The data controlling section 12 includes a control PDU transmission amount detecting section 124_1 and a data PDU transmission amount detecting section 124_2 in place of the transmission amount detecting section 124 shown in FIG. 4.

The control PDU transmission amount detecting section 124_1 detects the amount of data of the control PDU generated in the control PDU generating section 121 and informs the amount of data to the data controlling section 133 of the data multiplex section 13. The data PDU transmission amount detecting section 124_2 detects the amount of data of the data PDU generated in the data PDU generating section 122 and informs the amount of data to the data controlling section 133 of the data multiplex section 13.

Therefore, information of the amount of data divided into the control PDU and the data PDU is assembled from each LCH to the data controlling section 133. The control PDU is transmitted to the data controlling section 133 before the data PDU. The priority is set so that the control PDU of the LCH with high priority is first transmitted among the control PDUs, and the data PDU of the LCH with high priority is first transmitted among the data PDUs. In accordance with the priority, the data controlling section 133 instructs the control PDU transmission controlling section 123_1 and the data PDU transmission controlling section 123_2 of each LCH to transmit the control PDU and the data PDU to the transport block generating section 132 of the data multiplex section 13. The transport block generating section 132 multiplexes the header generated by the header generating section 131 and the control PDU and the data PDU transmitted from the control PDU transmission controlling section 123_1 and the data PDU transmission controlling section 123_2 of each LCH to generate a transport block. The transport block generated by the transport block generating section 132 is wirelessly transmitted to the base station through the wireless interface section 14 shown in FIG. 3.

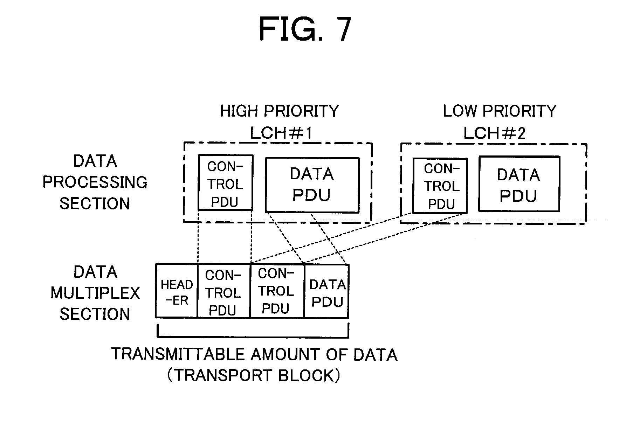

FIG. 7 illustrates an explanatory view of a data poly-algorithm in the embodiment shown in FIG. 6.

A transport block is generated herein in which, following the head, the control PDU of the LCH#1 with high priority in channel is arranged, the control PDU of the LCH#2 with low priority in channel is then arranged, and the data PDU of the LCH#1 with high priority in channel is further arranged for the amount that can be included in the transmittable amount of data.

According to the embodiment, the control PDU is prioritized over the data PDU regardless of the priority of the LCH. Therefore, a significant problem due to a transmission delay of the control PDU can be avoided.

Another embodiment will now be described. Only the features different from the previously described embodiment will be described by referring to FIG. 6 again.

The control PDU transmission amount detecting section 124_1 of each LCH subdivides the control PDU generated by the control PDU generating section 121 in accordance with the type of the control data to detect the amount of data of each type and informs the detected amount of data of each type to the data controlling section 133. Meanwhile, as in the previously-described embodiment, the data PDU transmission amount detecting section 124_2 collectively detects the amount of the data PDU generated by the data PDU generating section 122 and informs the amount of data to the data controlling section 133.

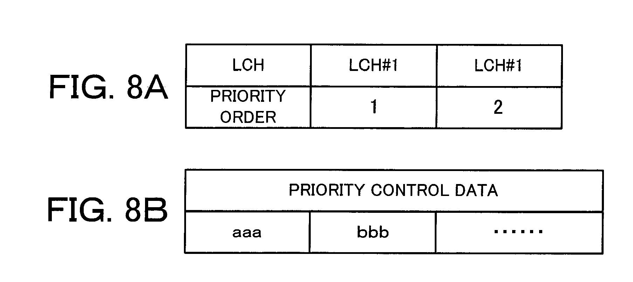

FIGs. 8A and 8B illustrate diagrams showing the priority employed in the data controlling section.

As shown in FIG. 8A, the priority that can be freely changed is set in each LCH, and the types that should be prioritized are recorded in relation to the control data.

FIGs. 8A and 8B illustrates that the priority of the LCH#1 is the highest and the priority of the LCH#2 is the second highest as for the LCH and that the control data of types aaa, bbb, ... should be prioritized as for the control data.

The data controlling section 133 of FIG. 6 issues an instruction to the control PDU transmission controlling section 123_1 and the data PDU transmission controlling section 123_2 of each LCH in accordance with the priority shown in FIG. 8 so as to preferentially transmit the type of control data that should be prioritized. The control PDU transmission controlling section 123_1 is configured to divide the control data in accordance with the type so as to be able to only transmit the specified type of control data to the transport block generating section 132.

This embodiment enables to preferentially transmit the control data that may cause a serious impact due to a transmission delay, while weighing (taking into account) the priority of the LCHs as compared to the previously described embodiment.

In the embodiments, the transmission from the terminal equipment 10 to the base stations 20 in the wireless communication system shown in FIG. 1 has been described as an example. The same holds for the transmission from the base stations 20 to the terminal 10.

## Claims

1. A communication device comprising in each of a plurality of channels:
each of a plurality of data processing sections that processes transmission data;
a data multiplex section that receives the transmission data from each of the plurality of data processing sections and generates a transport block formed of transmission data whose amount is transmittable in one transmission; and
a communication section that transmits the transport block in the form of data packet generated in the data multiplex section,
wherein each of the plurality of data processing sections further comprises a transmission amount detecting section that detects an amount of the transmission data and an amount of control data for controlling the transmission data for each type of the transmission data processed in the data processing section, and informs the detected amount of the transmission data and the detected amount of control data to the data multiplex section, and
the data multiplex section preferentially allocates the data sent from the plurality of data processing sections to the transport block based on the priority of the amount of the transmission data and the amount of control data of each type and the priority of each channel, which amounts are informed from the plurality of data processing sections.

2. The communication device according to claim 1, wherein each of the plurality of data processing sections further comprises a user data generating section that generates user data, which is the transmission data, and a control data generating section that generates control data for controlling the user data,
the transmission amount detecting section informs the amount of the user data and the amount of the control data generated by the data processing section to the data multiplex section, and
the data multiplex section allocates the data sent from the plurality of data processing sections to the transport block so that the control data is transmitted prior to the user data.

3. The communication device according to claim 1 or 2, wherein the plurality of data processing sections further comprises a user data generating section that generates user data, which is the transmission data, and a control data generating section that generates control data for controlling the user data,
the transmission amount detecting section informs the amount of the control data for each type of control data generated by the data processing section and the amount of the user data generated by the data processing section to the data multiplex section, and
the data multiplex section allocates the data sent from the plurality of data processing sections to the transport block so that a specific type of control data among the control data is transmitted prior to the control data of a type other than the specific type and the user data.

4. A program that causes a computer to function as a communication device, the program comprising the steps causing the computer to execute in each of a plurality of channels of:
a plurality of data processing steps that process transmission data;
a data multiplex step that receives the transmission data from the plurality of data processing steps and generates a transport block formed of transmission data whose amount is transmittable in one transmission; and
a communication step that transmits the transport block in the form of data packet generated in the data multiplex step,
wherein each of the plurality of data processing steps further comprises a transmission amount detecting step that detects an amount of transmission data and an amount of control data for controlling the transmission data for each type of the transmission data processed in the data processing step, and informs the detected amount of transmission data and the detected amount of control data to the data multiplex step, and
the data multiplex step preferentially allocates the data sent from the plurality of data processing steps to the transport block based on the priority of the amount of transmission data and the amount of control data of each type and the priority of each channel, which amounts are informed from the plurality of data processing sections.

5. A computer-readable medium storing the program according to claim 4.

6. A communication method that causes a computer to execute communication procedures, the communication method comprising in each of a plurality of channels:
a plurality of data processing procedures that process transmission data;
a data multiplex procedure that receives the transmission data from the plurality of data processing procedures and generates a transport block formed of transmission data whose amount is transmittable in one transmission; and
a communication procedure that transmits the transport block in the form of data packet generated by the data multiplex procedure,
wherein each of the plurality of data processing procedures further comprises a transmission amount detecting procedure that detects an amount of transmission data and an amount of control data for controlling the transmission data for each type of transmission data processed in the data processing procedure, and informs the detected amount of transmission data and the detected amount of control data to the data multiplex procedure, and
the data multiplex procedure preferentially allocates the data sent from the plurality of data processing procedures to the transport block based on the priority of the amount of transmission data and the amount of control data of each type and the priority of each channel, which amounts are informed from the plurality of data processing sections.
